# EUROPEAN PATENT APPLICATION

(11) **EP 4 397 622 A1**
(43) Date of publication of application: **10.07.2024**
(21) Application number: 23150537.1
(22) Date of filing: 06.01.2023
(51) Int. Cl.: C01B 33/113, B82Y 30/00, B82Y 40/00, C01B 33/18

(54) **MESOPOROUS SILICA PARTICLES**

(71) Applicant: Luxembourg Institute of Science and Technology (LIST), 4362 Esch-sur-Alzette (LU); The Goodyear Tire & Rubber Company, Akron, OH 44316 (US)
(72) Inventor: MORETTO, Enzo, 4362 Esch-sur-Alzette (LU); THOMANN, Jean Sébastien, 4362 Esch-sur-Alzette (LU)
(74) Representative: Patent 42

(57) **Abstract**

The present disclosure relates to mesoporous silica particles, remarkable in that said mesoporous silica particles have a diameter size ranging between 50 nm and 150 nm as determined by transmission electron microscopy, wherein said mesoporous silica particles comprise an external surface with pores and an internal core comprising channels extending to said pores, the external surface being functionalized with a first type of functional group and the channels presenting a surface functionalized with a second type of functional group, the first type of functional group being different from the second type of functional group, wherein the pores have a diameter ranging between 5 nm and below 30 nm as determined by transmission electron microscopy and wherein said mesoporous silica particles show a dendrite morphology with dendrites evidenced by transmission electron microscopy.

## Description

### Field of the disclosure

The present disclosure relates to mesoporous silica particles, a blend of particles comprising among other such mesoporous silica particles, a process for synthesizing such mesoporous silica particles and the use of such mesoporous silica particles in dental resins. A polymethyl methacrylate composite comprising such mesoporous silica particles is also described.

### Background of the disclosure

For technical application, polymers are almost always combined with reinforcement materials to drastically improve their performances, as neat polymer properties are often not enough. To improve the properties of the polymers, or of polymer composites, reinforcing fillers, such as silica particles, can be dispersed into the polymer matrix. Properties such as tensile strength, tear-resistance and abrasion resistance of the polymer composites can thus be improved. The dispersion of silica in the polymer can strongly influence the final properties of the polymer composites.

Poly(methyl methacrylate) (PMMA) is an important member of the family of polyacrylic and methacrylic esters and is the most predominant polymer which is used as denture base materials. PMMA has several desirable properties, including exceptional optical clarity, good weatherability, high strength, and excellent dimensional stability. PMMA composites provide reduced gas permeability, improved physical performance, and increased heat resistance, without a sacrifice in optical clarity. PMMA composites have also the advantages of being lightweight, inexpensinve, and easy to handle. However, the PMMA composites present poor mechanical strength such as low impact and flexural strength, which can sometimes lead to failure during chewing.

To reinforce the polymeric matrix, different studies have already been carried out. For example, the work of Cauda V., et al., entitled "Multiple core-shell functionalized colloidal mesoporous silica nanoparticles" (J. Am. Chem. Soc., 2009, 131, 11361-11370) provides bifunctional colloidal mesoporous silica nanoparticles showing a mono-distribution of pores having a diameter inferior to 4 nm. Similar results were reported in the study by Kecht J., et al., entitled "Selective functionalization of the outer and inner surfaces in mesoporous silica nanoparticles" (Chem. Mater., 2008, 20, 7207-7214).

The present disclosure has for objective to improve the stability of polymer composites comprising filler, such as polymethyl methacrylate composite and/or plastic composite. In particular, the present disclosure aims to improve the stability of polymer composites comprising silica particles wherein the risk of dislocation of the polymer composite is avoided or at least reduced.

### Summary of the disclosure

According to a **first aspect,** the disclosure provides mesoporous silica particles, remarkable in that said mesoporous silica particles have a diameter size ranging between 50 nm and 150 nm as determined by transmission electron microscopy, wherein said mesoporous silica particles comprise an external surface with pores and an internal core comprising channels extending to said pores, the external surface being functionalized with a first type of functional group and the channels presenting a surface functionalized with a second type of functional group, the first type of functional group being different from the second type of functional group, wherein the pores have a diameter ranging between 5 nm and below 30 nm as determined by transmission electron microscopy and wherein said mesoporous silica particles show a dendrite morphology with dendrites evidenced by transmission electron microscopy.

Surprisingly, it has been found that the mesoporous silica particles of the present disclosure, due to their particular dendritic morphology can disperse very well into a polymer composite, such as a PMMA composite and/or a plastic composite. The relatively large pores (of at least 5 nm of diameter), which show a polydisperse distribution due to the dendritic morphology allow the polymer to permeate into the mesopores. This considerably decreases the risk of dislocation of the polymer composite. The polydisperse distribution as well the bi-functionalization are also advantageous to interlock the different components of the composite together, and it has been demonstrated that these mesoporous silica nanoparticles improve the properties of the polymeric matrix with which they form the composite. In addition, as the particles are porous, in case of any mechanical deformation, this is not irreversible, contributing therefore to the improvement of the stability of the polymeric composite to which they serve as reinforcing materials.

Advantageously, said second type of functional group is one or more acrylic moieties and said first type of functional group is one or more moieties selected from alkyl, aryl, chlorine, or amino.

For example, the pores have a diameter ranging between 6 nm and 29 nm as determined by transmission electron microscopy, preferably between 7 nm and 28 nm, more preferably between 8 nm and 27 nm, even more preferably between 9 nm and 26 nm, most preferably between 10 nm and 25 nm, or between 11 nm and 25 nm, or between 12 nm and 25 nm, or between 13 nm and 25 nm, or between 14 nm and 25 nm, or between 15 nm and 25 nm.

For example, the pores having a diameter ranging between 5 nm and below 30 nm as determined by transmission electron microscopy are a first type of pores, the mesoporous silica particles further comprising a second type of pores having a diameter ranging between 30 nm and 40 nm as determined by transmission electron microscopy, preferably between 31 nm and 39 nm, more preferably between 32 nm and 38 nm, even more preferably between 33 nm and 37 nm.

For example, the mesoporous silica particles show a total internal pore volume ranging between 1 cm³/g and 2 cm³/g as determined by nitrogen adsorption porosimetry analysis, preferably ranging between 1.1 cm³/g and 1.9 cm³/g, more preferably between 1.2 cm³/g and 1.8 cm³/g, even more preferably between 1.3 cm³/g and 1.7 cm³/g.

For example, said mesoporous silica particles have a specific surface area ranging between 250 m²/g and 500 m²/g as determined by nitrogen adsorption porosimetry analysis, or between 250 m²/g and 450 m²/g, preferably between 275 m²/g and 425 m²/g, more preferably between 300 m²/g and 400 m²/g, even more preferably between 325 m²/g and 375 m²/g.

For example, the first type and/or the second type of functional groups are covalently bonded respectively to the external surface and to the surface of the channels, as determined by ²⁹Si solid-state nuclear magnetic resonance.

According to a **second aspect,** the disclosure provides a blend of particles, remarkable in that it comprises mesoporous silica particles as defined in accordance with the first aspect, and aggregates of silica, wherein the blend comprises at least 0.1 wt.% of aggregates of silica based on the total weight of said blend, or at least 1.0 wt.%, or at least 5.0 wt.%, or at least 10.0 wt.%.

With preference, the blend comprises from 50.0 wt.% to 99.9 wt.% of mesoporous silica particles based on the total weight of the blend, or from 50.0 wt.% to 99.0 wt.%, or from 50.0 wt.% to 95.0 wt.%, or from 50.0 wt.% to 90.0 wt.%, or from 50.0 wt.% to 85.0 wt.%, or from 50.0 wt.% to 80.0 wt.%, or from 50.0 wt.% to 75.0 wt.%.

For example, the blend comprises at least 15.0 wt.% of aggregates of silica based on the total weight of said blend, preferably at least 20.0 wt.%, more preferably at least 25.0 wt.%.

For example, the blend comprises at most 50.0 wt.% of aggregates of silica based on the total weight of said blend, preferably at most 45.0 wt.%, more preferably at most 40.0 wt.%, even more preferably at most 35.0 wt.%.

For example, the blend comprises between 5.0 wt.% and 50.0 wt.% of aggregates of silica based on the total weight of said blend, preferably between 10.0 wt.% and 50.0 wt.%, more preferably between 15.0 wt.% and 45.0 wt.%; even more preferably between 20.0 wt.% and 40.0 wt.%, most preferably between 25.0 wt.% and 35.0 wt.%.

For example, the aggregates of silica comprises silica nanoparticles, wherein the silica nanoparticles have a diameter ranging between 1 nm and 100 nm as determined by scanning transmission electron microscopy, or between 5 nm and 95 nm, or between 10 nm and 90 nm.

For example, the aggregates of silica have a size ranging between 50 µm and 350 µm as determined by scanning transmission electron microscopy, or between 75 µm and 325 µm, or between 100 µm and 300 µm.

According to a **third aspect,** the disclosure provides a polymethyl methacrylate composite, remarkable in that it comprises between 2.5 wt.% and 15 wt.% of mesoporous silica particles as defined in accordance with the first aspect, preferably between 3 wt.% and 12.5 wt.%, more preferably between 5 wt.% and 10 wt.%.

According to a **fourth aspect,** the disclosure provides a polymethyl methacrylate composite, remarkable in that it comprises between 2.5 wt.% and 15 wt.% of the blend of particles as defined in accordance with the second aspect, preferably between 3 wt.% and 12.5 wt.%, more preferably between 5 wt.% and 10 wt.%.

Whichever the third and/or the fourth aspect, the polymethyl methacrylate composite has preferably a glass transition temperature of at least 135°C, as determined by differential scanning calorimetry, more preferably of at least 140°C.

According to a **fifth aspect,** the disclosure provides a process for synthesizing mesoporous silica particles, preferably as defined in the first aspect, said process being remarkable in that it comprises the following steps:
a. providing an aqueous solution comprising at least one surfactant;
b. adding one or more silica precursors to the aqueous solution provided at step (a);
c. adding at least one inner-functionalizing component, to form mesoporous silica particles with pores filled with surfactant;
d. adding at least one outer-functionalizing component to said mesoporous silica particles with pores filled with surfactant;
e. removing said surfactant from the pores to generate mesoporous silica particles.

Optionally, the process further comprises a step (f) of washing the mesoporous silica particles with an organic solvent, preferably followed by a step (g) of drying said mesoporous silica particles.

With preference, the at least one surfactant is hexadecyltrimethylammonium p-toluene sulfonate.

For example, the one or more outer-functionalizing components are one or more compounds selected from trimethoxyphenylsilane, (3-chloropropyl)trimethoysilane, (3-aminopropyl)trimethoxysilane. With preference, the outer-functionalizing component is trimethoxyphenylsilane.

For example, the one or more inner-functionalizing components are one or more compounds selected from one or more acrylic compounds.

With preference, the one or more inner-functionalizing components is 3-(trimethoxysilyl)propyl methacrylate.

For example, steps (b), (c) and (d) are performed at a temperature ranging between 70°C and 90°C, preferably between 75°C and 85°C.

For example, step (e) is performed using a Soxhlet extractor.

According to a **sixth aspect,** the disclosure relates to the use of mesoporous silica particles as defined in the first aspect and/or of a blend of particles as defined in the second aspect as filler material for a dental composite resin.

For example, the dental composite resin is or comprises polymethyl methacrylate.

According to a **seventh aspect,** the disclosure relates to the use of mesoporous silica particles as defined in the first aspect and/or of a blend of particles as defined in the second aspect as filler material for a plastic composite.

### Description of the figures

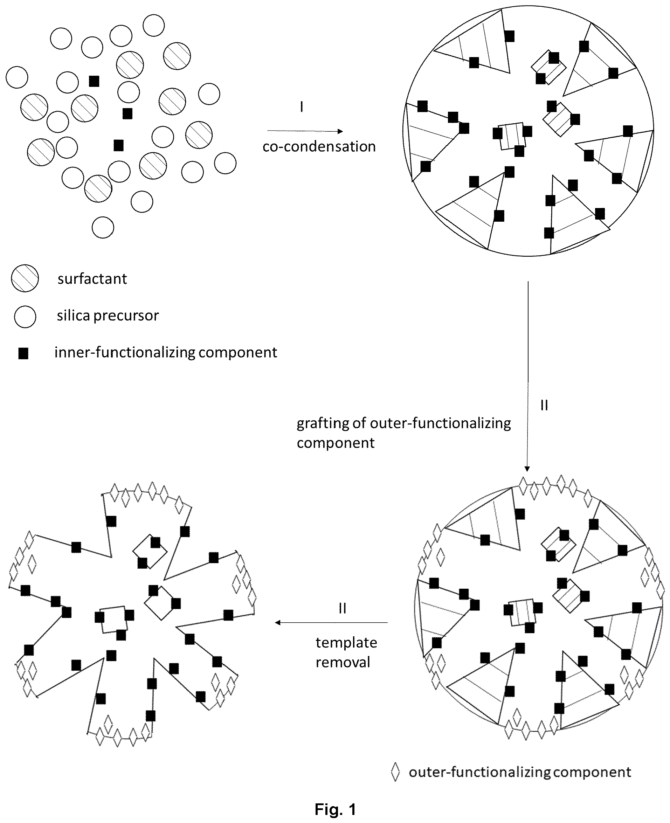

Figure 1: Schematic representation of the process of the present disclosure.

### Detailed description of the disclosure

For the purpose of the disclosure, the following definitions are given:
The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (*e.g*., 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (*e.g*., from 1.0 to 5.0 includes both 1.0 and 5.0). Any numerical range recited herein is intended to include all sub-ranges subsumed therein.

The particular features, structures, characteristics or embodiments may be combined in any suitable manner, as would be apparent to a person skilled in the art from this disclosure, in one or more embodiments.

The disclosure relates to mesoporous silica particles, remarkable in that said mesoporous silica particles have a diameter size ranging between 50 nm and 150 nm as determined by transmission electron microscopy, wherein said mesoporous silica particles comprise an external surface with pores and an internal core comprising channels extending to said pores, the external surface being functionalized with a first type of functional group and the channels presenting a surface functionalized with a second type of functional group, the first type of functional group being different from the second type of functional group, wherein the pores have a diameter ranging between 5 nm and below 30 nm as determined by transmission electron microscopy and wherein said mesoporous silica particles show a dendrite morphology with dendrites evidenced by transmission electron microscopy.

The bi-functionalized mesoporous silica particles due to their particular dendritic morphology can disperse very well into a polymer composite, such as a PMMA composite and/or a plastic composite. The multiple branching level of the dendrite morphology allows the presence of internal cavities allowing any polymers to accommodate within the silica particle. Furthermore, the polydisperse distribution allows the polymers to permeate within the rather large mesopores, conferring therefore stability to the polymer composite.

The bi-functionalized mesoporous silica particles are synthesized according to the process schematized in figure 1. In a first stage of the process (I), there is a co-condensation between at least one surfactant, one or more silica precursors and one or more inner-functionalizing components. Acrylic compounds, such as 3-(trimethoxysilyl)propyl methacrylate, can act as one or more inner-functionalizing compounds. The co-condensation results in mesoporous silica particles, the pores of which being filled with the one or more surfactants. The second type of functional group that is then grafted to the surface of the channels of the internal core of the silica particles is therefore acrylic moieties. Then, in a second stage of the process (II), there is the grafting of the one or more outer-functionalizing components. Trimethoxyphenylsilane, (3-chloropropyl)trimethoysilane, and/or (3-aminopropyl)trimethoxysilane can act as outer-functionalizing components. This leads respectively to a first type of functional group being grafted on the external surface of the silica particle, wherein the functional groups of the first type are selected from aryl, chlorine, amino moieties, and any mixture thereof. The process is preferably carried out at a temperature ranging between 70°C and 90°C, preferably between 75°C and 85°C. The final stage of the process (III) comprises the removal of the surfactant, which acted as a template for the formation of the silica particles, and notably its morphology. For example, this step is performed using a Soxhlet extractor, meaning that the extraction is carried out under reflux.

The choice of the surfactant is of paramount importance since it is selected to confer the dendrite morphology to the silica particles. Such surfactants capable of conferring a dendrite morphology can be cationic surfactant capable of forming wormlike micelles (WLMs). For example, a suitable surfactant is selected from hexadecyltrimethylammonium p-toluene sulfonate (CTATos), a mixture of erucyl bis(hydroxyethyl) methyl ammonium chloride (EHAC) and sodium tosylate, or a mixture of erucyl bis(hydroxyethyl) methyl ammonium chloride (EHAC) and sodium salicylate, preferably hexadecyltrimethylammonium p-toluene sulfonate (CTATos).

Optionally, the process further comprises a step (f) of washing the mesoporous silica particles with an organic solvent, for example, ethanol, preferably followed by a step (g) of drying said mesoporous silica particles.

For example, the pores have a diameter ranging between 6 nm and 29 nm as determined by transmission electron microscopy, preferably between 7 nm and 28 nm, more preferably between 8 nm and 27 nm, even more preferably between 9 nm and 26 nm, most preferably between 10 nm and 25 nm, or between 11 nm and 25 nm, or between 12 nm and 25 nm, or between 13 nm and 25 nm, or between 14 nm and 25 nm, or between 15 nm and 25 nm.

For example, the pores of the mesoporous silica particles have a diameter ranging between 2 nm and below 30 nm as determined by transmission electron microscopy, and at least 80% of the pores of the mesoporous silica particles have a diameter ranging between 5 nm and below 30 nm as determined by transmission electron microscopy, preferably at least 85%, more preferably at least 90%, even more preferably at least 95%, most preferably at least 99%, even most preferably 100% of the pores of the mesoporous silica particles have a diameter ranging between 5 nm and below 30 nm as determined by transmission electron microscopy.

The polydisperse distribution allows the polymers, such as the polymethyl methacrylate polymer network, to permeate within the rather large mesopores, conferring therefore stability to the polymer composite. The pores having a diameter ranging between 2 nm, or 5 nm, and below 30 nm as determined by transmission electron microscopy are a first type of pores, the mesoporous silica particles advantageously further comprising a second type of pores having a diameter ranging between 30 nm and 40 nm as determined by transmission electron microscopy, preferably between 31 nm and 39 nm, more preferably between 32 nm and 38 nm, even more preferably between 33 nm and 37 nm.

For example, the mesoporous silica particles show a total internal pore volume ranging between 1 cm³/g and 2 cm³/g as determined by nitrogen adsorption porosimetry analysis, preferably ranging between 1.1 cm³/g and 1.9 cm³/g, more preferably between 1.2 cm³/g and 1.8 cm³/g, even more preferably between 1.3 cm³/g and 1.7 cm³/g.

For example, said mesoporous silica particles have a specific surface area ranging between 250 m²/g and 500 m²/g as determined by nitrogen adsorption porosimetry analysis, or between 250 m²/g and 450 m²/g, preferably between 275 m²/g and 425 m²/g, more preferably between 300 m²/g and 400 m²/g, even more preferably between 325 m²/g and 375 m²/g.

For example, the first type and/or the second type of functional groups are covalently bonded respectively to the external surface and the surface of the channels, as determined by ²⁹Si solid state nuclear magnetic resonance.

The bi-functionalized mesoporous silica particles of the present disclosure can be used as reinforcement materials in a dental composite resin, that can be or can comprise polymethyl methacrylate (PMMA). Other plastic composites can also be reinforced with such types of particles.

The synthesis of the PMMA composite has been achieved by an emulsion polymerization procedure, comprising providing a reaction vessel and adding, in the specified order, water, one or more surfactants (e.g., nonoxynol-9 and/or SDS), methyl methacrylate (MMA) and/or methyl methacrylate oligomers, sodium bicarbonate, ammonium persulfate and the bi-functionalized mesoporous silica particles of the present disclosure. The mixture has been stirred, for example by sonication, and then heated, preferably under stirring. For example, the temperature is ranging between 60°C and 90°C, or between 65°C and 85°C. The heating can be conducted for example for a time ranging between 1 hour and 5 hours, or between 2 hours and 4 hours. After this time, the emulsion is stopped by the addition of an aqueous solution of a metallic salt, such as aluminium sulfate (the aqueous solution of Al₂(SO₄)₃ can comprise between 5 wt.% of Al₂(SO₄)₃ and 15 wt.% of Al₂(SO₄)₃ based on the total weight of said aqueous solution of Al₂(SO₄)₃). The solid products that have been obtained can be thus filtered. They can be washed with water and then dried. The composites are then formed by compression moulding at a temperature ranging between 200°C and 300°C, preferably between 225°C and 275°C, or between 230°C and 270°C, and/or at a pressure ranging between 140 MPa and 200 MPa, preferably between 150 MPa and 190 MPa, or between 160 MPa and 180 MPa.

Subsequently, the disclosure also relates to a polymethyl methacrylate composite, comprising between 2.5 wt.% and 15 wt.% of bi-functionalized mesoporous silica particles as defined above, preferably between 3 wt.% and 12.5 wt.%, more preferably between 5 wt.% and 10 wt.%. Such composite shows a higher glass transition temperature (T_{g}) than the unfilled PMMA composite, for example, the T_{g} is of at least 135°C, as determined by differential scanning calorimetry, more preferably of at least 140°C.

It was further noted that the bi-functionalized mesoporous silica particles of the present disclosure can behave better, notably in terms of stability, when a percolation network is provided. The percolation network is provided when aggregates of silica are arranged between the mesoporous silica particles.

Thus, a blend of particles comprising mesoporous silica particles as defined above, and further comprising aggregates of silica has been made. This blend comprises at least 0.1 wt.% of aggregates of silica based on the total weight of said blend, or at least 1.0 wt.%, or at least 5.0 wt.%, or at least 10.0 wt.%.

With preference, the blend comprises from 50.0 wt.% to 99.9 wt.% of mesoporous silica particles based on the total weight of the blend, or from 50.0 wt.% to 99.0 wt.%, or from 50.0 wt.% to 95.0 wt.%, or from 50.0 wt.% to 90.0 wt.%, or from 50.0 wt.% to 85.0 wt.%, or from 50.0 wt.% to 80.0 wt.%, or from 50.0 wt.% to 75.0 wt.%.

For example, the blend comprises at least 15.0 wt.% of aggregates of silica based on the total weight of said blend, preferably at least 20.0 wt.%, more preferably at least 25.0 wt.%.

For example, the blend comprises at most 50.0 wt.% of aggregates of silica based on the total weight of said blend, preferably at most 45.0 wt.%, more preferably at most 40.0 wt.%, even more preferably at most 35.0 wt.%.

For example, the blend comprises between 5.0 wt.% and 50.0 wt.% of aggregates of silica based on the total weight of said blend, preferably between 10.0 wt.% and 50.0 wt.%, more preferably between 15.0 wt.% and 45.0 wt.%; even more preferably between 20.0 wt.% and 40.0 wt.%, most preferably between 25.0 wt.% and 35.0 wt.%.

For example, the aggregates of silica comprises silica nanoparticles, wherein the silica nanoparticles have a diameter ranging between 1 nm and 100 nm as determined by scanning transmission electron microscopy, or between 5 nm and 90 nm, or between 10 nm and 80 nm, or between 15 nm and 70 nm.

For example, the aggregates of silica have a size ranging between 50 µm and 350 µm as determined by scanning transmission electron microscopy, or between 60 µm and 340 µm, or between 70 µm and 330 µm, or between 80 µm and 320 µm, or between 90 µm and 310 µm, or between 100 µm and 300 µm.

Subsequently, the present disclosure also relates to polymethyl methacrylate composite comprising between 2.5 wt.% and 15 wt.% of a blend of particles as defined above, preferably between 3 wt.% and 12.5 wt.%, more preferably between 5 wt.% and 10 wt.%.

### Test and determination methods

### (Scanning) Transmission electron microscopy (S)TEM

(Scanning) Transmission electron microscopy (S)TEM investigations were carried out using a JEM - ARM 200F Cold FEG TEM/STEM operating at 200 kV and equipped with a spherical aberration (Cs) probe and image correctors (point resolution 0.12 nm in TEM mode and 0.078 nm in STEM mode).

### Nitrogen adsorption porosimetry

The specific surface area and pore volume of mesoporous silica particles have been determined by the Barrett-Joyner-Halenda (BJH) method using an Autosorb-IQ-MP/XR analyser from the Quantachrome Instruments company (Boynton Beach, Florida, USA). Before performing nitrogen sorption measurement, the sample was degassed at 100°C for8h. Pores volumes were estimated using the Density Functional Theory (DFT) method.

### Solid-state ²⁹Si MAS (Magic Angle Spinning) NMR of regio-selectively functionalized mesoporous silica

Solid-state ²⁹Si MAS (Magic Angle Spinning) NMR spectra were acquired on a Bruker Avance 400MHz spectrometer (9.4 T wide bore magnet) equipped with a 4 mm BL4 X/Y/H probe. Magic angle spinning was performed at 6.5 kHz using ceramic zirconia rotors of 4 mm in diameter. The signal of talc was used to calibrate the silicon chemical shift scale (-98 ppm). Acquisition parameters used were the following: a spectral width of 300 ppm, a 90° pulse length of 4.5 µs, an acquisition time of 15ms, a recycle delay time of 60 s and about 3000 accumulations (48 hrs.). High power proton dipolar decoupling during the acquisition time was set to 70 kHz. Solid-state ²⁹Si MAS (Magic Angle Spinning) NMR spectra were also acquired on an Agilent VNMRS Direct Drive 400 MHz spectrometer (9.4 T wide bore magnet) equipped with a T3HX 3.2 mm probe. Magic angle spinning was performed at 6.5 kHz using ceramic zirconia rotors of 3.2 mm in diameter, and the signal of talc was used to calibrate the silicon chemical shift scale (-98 ppm). Acquisition parameters used were the following: a spectral width of 300 ppm, a 90° pulse length of 5 µs, an acquisition time of 15 ms, a recycle delay time of 60 s and about 4400 accumulations (72 hrs.). High power proton dipolar decoupling during the acquisition time was set to 70 kHz.

### Differential Scanning Calorimetry (DSC)

The glass transition temperature (T_{g}) of the samples was determined using a DSC instrument (DSC 3+, METTLER TOLEDO GmbH) under a nitrogen atmosphere. Before analysis, the sample was dried overnight under a vacuum at 60°C. During each measurement, approximately 10 mg of dry sample was used. The samples were heated from room temperature to 120°C at a heating rate of 10°C/min (first measurement cycle), isothermal for 5 minutes, cooled to 0°C at a cooling rate of 10°C/min, isothermal for 5 minutes, then reheated to 200°C at a heating rate of 10°C/min (second measurement cycle). T_{g} was measured from the second measurement cycle.

### Dynamic mechanical analysis (DMA)

The dynamic strain sweep of the samples (cuboids: 49 * 6.2 * 2 mm) was conducted using a dynamic mechanical analyzer (DMA, Netzsch 242 C, Germany) in tensile mode at 25 °C. 10% static load of 15 N and (0 to 8 %) dynamic load of 10 N with an increment of 10 steps/dec was applied to the samples with a frequency of 0.5 Hz. Two strain sweeps were conducted on each sample with 30 minutes intervals. The storage modulus (E') as a function of strain was obtained.

### Examples

The embodiments of the present disclosure will be better understood by looking at the example below.

### Synthesis of Regio-selectively Modified Dendritic mesoporous Silica particles (RMDS)

Tetraethoxysilane (TEOS) (CAS 78-10-4), hexadecyltrimethylammonium p-toluene sulfonate (CTATos) (CAS 138-32-9), triethanolamine (TEA) (CAS 102-71-6), 3-(trimethoxysilyl)propyl methacrylate (CAS 2530-85-0), trimethoxyphenylsilane (CAS 2996-92-1), nonoxynol-9 (CAS 26027-38-3), sodium dodecyl sulfate (SDS) (CAS 151-21-3), methyl methacrylate (MMA) (CAS 80-62-6), sodium bicarbonate (CAS 144-55-8), ammonium persulfate (CAS 7727-54-0), and aluminium sulfate (CAS 10043-01-3) have been purchased from Merck.

In an Orb Pilot 50 L reaction vessel, 34.7 g of triethanolamine and 192.0 g of hexadecyltrimethylammonium *p*-toluene sulfonate are dissolved in 10.0 L of de-ionized water. The solution is heated at 80°C and mixed for 120 min. Then, 1458.0 g of tetraethoxysilane (TEOS) are added. The reaction starts and is kept at 80°C under stirring until the end of the process. 15 min after the addition of TEOS, 210 g of 3-(trimethoxysilyl)propyl methacrylate is added to the reaction vessel. 120 min after the addition of TEOS, 160 g of trimethoxyphenylsilane are added. The reaction is then carried out for another 120 min at 80°C under stirring. At the end of the reaction, stirring is stopped and the silica particles are left to settle at the bottom of the reaction vessel. The supernatant above the settled silica is removed from the vessel via a pump and 15 L of de-ionized water is added. Silica and water are mixed for 12 h at room temperature, stirring is stopped and the silica particles are left to settle at the bottom of the reaction vessel. Again, the supernatant is removed, and 15 L of ethanol are added. Silica and ethanol are mixed for 12 h. at reflux temperature under stirring. Finally, stirring is stopped and silica particles are let to settle at the bottom of the reaction vessel. The ethanol supernatant is removed. The highly concentrated silica particles in ethanol are then separated by centrifugation (4700 g for 1h). RMDS are then dried in an oven at 110°C for 48h and stored in a sealed container.

Those RMDS are then used for reinforcing polymethyl methacrylate (PMMA) composite, traditionally used in dentistry.

### Preparation of PMMA composite with reinforcement materials

Polymethyl methacrylate PMMA is prepared in presence of RMDS as reinforcement materials. The RMDS amounts to 5 wt.% or 10 wt.% of the total weight of the PMMA composite. Briefly, emulsion polymerization reactions were carried out in a 500 mL glass reactor equipped with a reflux condenser, stainless-steel stirrer, and thermometer. The polymer content of the emulsion was 42 wt.% based on the total weight of the emulsion. For the *in-situ* batch emulsion polymerization procedure, water (180.0 g), nonoxynol-9 (TERGITOL^{™} NP-9) (2.40 g), SDS (1.40 g), methyl methacrylate (MMA) and MMA Oligomers (120.0 g), sodium bicarbonate (0.40 g), ammonium persulfate (APS) (0.36 g) and the RMDS (6 g or 12 g) were charged in the reactor in the order stated.

For comparison purposes, the same protocol without RMDS has been achieved.

At the beginning of the polymerization, the reaction vessel was sonicated for 10 min, followed by purging with nitrogen for 15 min, and then the system was heated to 75°C for 3 h. The emulsion was demulsified by the addition of an aqueous solution of Al₂(SO₄)₃. The aqueous solution of Al₂(SO₄)₃ comprises 10 wt.% of Al₂(SO₄)₃ based on the total weight of said aqueous solution of Al₂(SO₄)₃. The solid products were filtered, washed thoroughly with water, and then dried at 60°C in a vacuum oven for 24 h. The final PMMA composites with the RMDS as filler material were formed by compression moulding at 250°C and 170 MPa.

### Improved properties of PMMA composite reinforced with RMDS

The glass transition temperature (T_{g}) is a good indication for defining the gain of properties of composites since T_{g} is connected to the polymer chain mobility. In fact, at Tg, the molecular chains of the composite slide past each other when a force is applied. Therefore, the higher the Tg, the better the stability of the polymer composite. T_{g} is determined by differential scanning calorimetry (DSC).

A second indication, correlated with the Tg, can be the determination of to storage modulus. The higher the Tg, the higher the storage modulus, lesser is the deformation that can be applied to the polymer composite. Storage modulus is determined by dynamic mechanical analysis (DMA).

A PMMA composite devoid of reinforcement material (unfilled PMMA) has a T_{g} of 125°C.

For the composite comprising 5 wt.% of reinforcement material (*i.e.*, RMDS synthesized according to the process of the disclosure), the T_{g} is 145°C. Such an increase is correlated to an increase in storage modulus which is 15% higher compared to the unfilled PMMA composite.

When the amount of RMDS achieved 10 wt.% of the total weight of the PMMA composite, this led to even higher mechanical properties. The T_{g} is 160°C and it was observed an increase of 25% of the storage modulus.

It is also highlighted that the PMMA composites with the RMDS as reinforcing material do not dislocate and are not brittle, which is interesting for dentistry implementations.

## Claims

1. Mesoporous silica particles, **characterized in that** said mesoporous silica particles have a diameter size ranging between 50 nm and 150 nm as determined by transmission electron microscopy, wherein said mesoporous silica particles comprise an external surface with pores and an internal core comprising channels extending to said pores, the external surface being functionalized with a first type of functional group and the channels presenting a surface functionalized with a second type of functional group, the first type of functional group being different from the second type of functional group, wherein the pores have a diameter ranging between 5 nm and below 30 nm as determined by transmission electron microscopy and wherein said mesoporous silica particles show a dendrite morphology with dendrites evidenced by transmission electron microscopy.

2. Mesoporous silica particles according to claim 1, characterized said second type of functional group is one or more acrylic moieties and in that said first type of functional group is one or more moieties selected from alkyl, aryl, chlorine, or amino.

3. Mesoporous silica particles according to any one of claims 1 or 2, **characterized in that** the pores having a diameter ranging between 5 nm and below 30 nm as determined by transmission electron microscopy are a first type of pores, the mesoporous silica particles further comprising a second type of pores having a diameter ranging between 30 nm and 40 nm as determined by transmission electron microscopy.

4. Mesoporous silica particles according to any one of claims 1 to 3, **characterized in that** the mesoporous silica particles show a total internal pore volume ranging between 1 cm³/g and 2 cm³/g as determined by nitrogen adsorption porosimetry analysis.

5. Mesoporous silica particles according to any one of claims 1 to 4, **characterized in that** said mesoporous silica particles have a specific surface area ranging between 250 m²/g and 500 m²/g as determined by nitrogen adsorption porosimetry analysis.

6. Mesoporous silica particles according to any one of claims 1 to 5, **characterized in that** the first type and/or the second type of functional groups are covalently bonded respectively to the external surface and to the surface of the channels, as determined by ²⁹Si solid state nuclear magnetic resonance.

7. Blend of particles, **characterized in that** it comprises mesoporous silica particles as defined in accordance with any one of claims 1 to 6, and aggregates of silica; wherein the blend comprises at least 5.0 wt.% of aggregates of silica based on the total weight of said blend; with preference, the blend comprises from 50.0 wt.% to 95.0 wt.% of mesoporous silica particles based on the total weight of the blend.

8. Blend of particles according to claim 7, **characterized in that** the aggregates of silica comprises silica nanoparticles, wherein the silica nanoparticles have a diameter ranging between 1 nm and 100 nm as determined by scanning transmission electron microscopy and/or **in that** the aggregates of a silica have a size ranging between 50 µm and 350 µm as determined by scanning transmission electron microscopy.

9. Process for synthesizing mesoporous silica particles, preferably as defined in any one of claims 1 to 6, said process being **characterized in that** it comprises the following steps:
a. providing an aqueous solution comprising at least one surfactant;
b. adding one or more silica precursors to the aqueous solution provided at step (a);
c. adding at least one inner-functionalizing component, to form mesoporous silica particles with pores filled with surfactant;
d. adding at least one outer-functionalizing component to said mesoporous silica particles with pores filled with surfactant;
e. removing said surfactant from the pores to generate mesoporous silica particles;
f. optionally, washing the mesoporous silica particles with an organic solvent, followed by a step (g) a drying said mesoporous silica particles.

10. Process according to claim 9, **characterized in that** the at least one surfactant is hexadecyltrimethylammonium p-toluene sulfonate.

11. Process according to claim 9 or 10, **characterized in that** the one or more outer-functionalizing components are one or more compounds selected from trimethoxyphenylsilane, (3-chloropropyl)trimethoysilane, (3-aminopropyl)trimethoxysilane; with preference, the outer-functionalizing component is trimethoxyphenylsilane.

12. Process according to any one of claims 9 to 11, **characterized in that** the one or more inner-functionalizing components are one or more compounds selected from one or more acrylic compounds; with preference, the one or more inner-functionalizing components is 3-(trimethoxysilyl)propyl methacrylate.

13. Process according to any one of claims 9 to 12, **characterized in that** the steps (b), (c) and (d) are performed at a temperature ranging between 70°C and 90°C and/or **in that** step (e) is performed using a Soxhlet extractor.

14. A polymethyl methacrylate composite, **characterized in that** it comprises between 2.5 wt.% and 15 wt.% of mesoporous silica particles as defined in accordance with any one of claims 1 to 6 **and/or in that** it comprises between 2.5 wt.% and 15 wt.% of a blend of particles as defined in accordance with claims 7 or 8.

15. Use of mesoporous silica particles as defined in accordance with any one of claims 1 to 6 and/or of a blend of particles as defined in accordance with claims 7 or 8 as filler material for a dental composite resin **and/or** a plastic composite.
